# EUROPEAN PATENT SPECIFICATION

(11) **EP 0 415 723 B1**
(45) Date of publication and mention of the grant of the patent: **10.07.1996**
(21) Application number: 90309413.4
(22) Date of filing: 29.08.1990
(51) Int. Cl.: H04M 11/06, H04N 1/32

(54) **Automatic switching apparatus between data and speech communication**
Automatische Umschaltungseinrichtung zwischen Daten- und Sprachkommunikation
Appareil de commutation automatique entre une communication de données et vocale

(30) Priority: 30.08.1989 JP 224105/89
(43) Date of publication of application: 06.03.1991
(73) Proprietor: CANON KABUSHIKI KAISHA, Tokyo (JP)
(72) Inventor: Takahashi, Taketo, c/o Canon Kabushiki Kaisha, Ohta-ku, Tokyo (JP); Watanabe, Tsunehiro, c/o Canon Kabushiki Kaisha, Ohta-ku, Tokyo (JP); Nishii, Teruyuki, c/o Canon Kabushiki Kaisha, Ohta-ku, Tokyo (JP); Ueno, Yasuhide, c/o Canon Kabushiki Kaisha, Ohta-ku, Tokyo (JP)
(74) Representative: Beresford, Keith Denis Lewis

(56) References cited:
- GB-A- 2 212 363
- US-A- 4 677 660

## Description

The present invention relates to a communication apparatus and a method of operating a communication apparatus which can selectively execute speech communication and data communication.

As an apparatus of this type, a facsimile device which communicates image data is known. The prior art facsimile device is capable of automatically determining whether a calling station is a human (telephone set) or a facsimile device when it receives a call (hereinafter TEL/FAX automatic switching). There are three known methods for implementing TEL/FAX automatic switching.

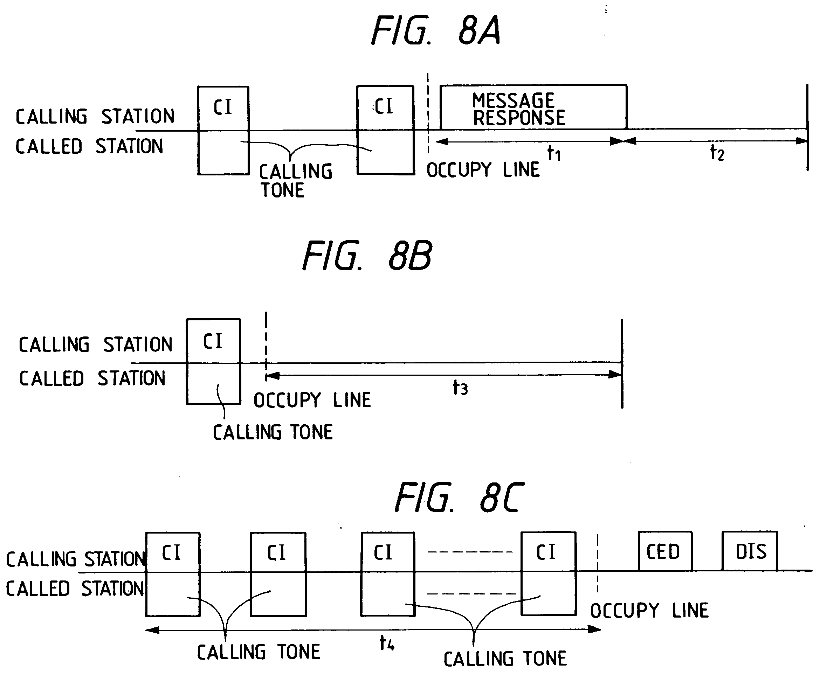

In a first method, after a line has been captured at the reception of a call, a voice message (for example, "please say hello if it is a telephone and depress a start button if it is a facsimile device") is sent to the calling station, and the apparatus monitors for a signal from the calling station. If voice is detected, it is determined that the calling station requires speech communication and a bell in the facsimile device or a built-in telephone set is rung to call an operator. If the signal from the calling station is a CNG signal (call tone signal) or a no signal status continues for longer than a predetermined time period (t₂), it is determined that the calling station is a facsimile device, a called device identification signal (CED) and a digital identification signal (DIS) are sent out and facsimile communication is then automatically started. (See Fig. 8A).

In a second method, after the line has been captured at the reception of the call, no response is made for a predetermined time period (t₃) and the apparatus then monitors for a CNG signal or voice signal from the calling station. As in the first method mentioned above, if a voice signal is detected, the operator is called, and if the CNG signal is detected or no signal is detected during the time period t₃, facsimile communication is automatically started. (See Fig. 8B).

In a third method, when a call is received, an operator is called without capturing the line for a predetermined time period t₄ (which may be arbitrarily set). If an off-hook of a hand set by the operator is detected during the time period t₄, the apparatus subsequently functions as a telephone set, and if no off-hook is detected in the time period t₄, it is determined that the calling station is a facsimile device and facsimile communication is thereafter started. (See Fig. 8C).

The techniques of TEL/FAX automatic switching described above are disclosed in USP 4,677,660, USP 4,663,778, USP 4,815,121, USP 4,800,439, US Serial No. 403,842, USP 4,916,607 and USP 4,353,097.

These prior art devices, however, have the following problems.

In the first method, the voice response is hard to listen if the line condition is bad.

Further, if a person at the calling station is not accustomed to voice response, it is possible that the absence of an operator at the called station will be determined at the stage of the first voice message and the line then opened. Further, it is unnatural to force the person at the calling station to speak.

Further, as shown in Fig. 8A, 10 - 15 seconds are required for t₁, 5 - 10 seconds are required for t₂, and total of 15 - 25 seconds are required. As a result, a considerable time is required for the TEL/FAX automatic switching.

In the second method, the fact that no voice response is given to the calling station for the t₃(5 - 10) seconds) time period, may cause the operator to believe that there is a fault in the system and to open the line.

In the third method, if the calling station is a facsimile device, the t₄ time period is always required before the facsimile communication is started, and smooth switching to the facsimile communication is not achieved.

Further, if the operator at the called station does not hook off in t₄ time period, the facsimile communication is started even if the calling station is a telephone set. Accordingly, an efficiency of the TEL/FAX switching is low.

GB-A-2212363 describes a fax/telephone switching device in which, after detection of an incoming signal by a calling-detector circuit, a toner detector circuit determines whether the calling signal is a fax signal or a voice telephone signal. If the calling signal is a voice telephone signal, then a buzzer oscillator is activated to activate the buzzer of the telephone being called and a blind-tone oscillator sends a blind tone to the caller, notifying the caller to wait, until the telephone being called is picked up. If the incoming calling signal is a fax signal, then the incoming call is transmitted directly to a fax receiving machine.

According to one aspect of the present invention, there is provided a communication apparatus comprising first detection means for detecting a calling signal from a line; second detection means for detecting a signal indicating data communication from the line; data communication means for effecting data communication in response to detection of a signal by said second detection means; sending means for sending out a quasi-calling tone to the line; and control means for controlling said data communication means and said sending means, the control means being arranged to cause the data communication means to effect data communication directly upon detection of a signal indicating data communication by the second detection means within a predetermined period after the detection of a calling signal by the first detection means and being arranged to cause the sending means to send out the quasi-calling tone periodically when the second detection means does not detect a signal indicating data communication within the predetermined time and then to stop the sending means sending out the quasi-calling tone periodically and to cause the data communication means to effect data communication when a signal indicating data communication is detected by the second detection means after the predetermined time.

According to another aspect of the present invention there is provided a method of operating a communication apparatus, which method comprises effecting data communication directly upon detection of a signal indicating data communication from a line within a predetermined period after the detection of a calling signal from the line and sending out a quasi-calling tone to the line periodically when a signal indicating data communication is not detected within the predetermined time and then stopping sending out the quasi-calling tone periodically and effecting data communication when a signal indicating data communication is detected after the predetermined time.

Communication apparatus embodying the invention enables automatic switching between data communication and speech communication to be attained with a short transition time from the reception of a call to the start of the data communication.

It should be understood that the terms 'quasi-calling tone' and 'quasi-called tone' used throughout the following description and in the drawings are used interchangeably to refer to the same tone.

Embodiments of the present invention will now be described, by way of example, with reference to the accompanying drawings, in which:
Fig. 1 shows a configuration of a facsimile device in one embodiment;
Figs. 2 and 3 show time relations between the send-out of a quasi-calling tone (quasi-called tone) and the reception of CNG,
Fig. 4 shows a send-out timing of a voice message,
Fig. 5 shows a send-out timing of the quasi-called tone in the embodiment,
Figs. 6A and 6B show a configuration of a tonal counter 10 and signals thereof,
Fig. 7 shows a flow chart of a control operation by a controller 19 in the embodiment,
Figs. 8A, 8B and 8C show prior art TEL/FAX switching,
Fig. 9 shows a counter on a RAM of the tonal counter 10,
Figs. 10A and 10B illustrate counting by the tonal counter 10,
Fig. 11 shows a superimposed signal of the CNG and the quasi-called tone (quasi-calling tone),
Fig. 12 shows a flow chart of a control operation in embodiments 3 and 4,
Fig. 13 shows a flow chart of a control operation of embodiment 5,
Fig. 14 shows a modification of the quasi-called tone in embodiment 6,
Fig. 15 shows a flow chart of a control operation of the embodiment 6,
Fig. 16 shows a flow chart of a control operation of embodiment 9, and
Fig. 17 shows a flow chart of a control operation of embodiment 10.

### DETAILED DESCRIPTION OF THE PREFERRED EMBODIMENTS

The preferred embodiments of the present invention will now be described with reference to the drawings. In the following embodiments, a facsimile device is described although the present invention is applicable to not only the facsimile device but also any other data communication apparatus such as a telex device.

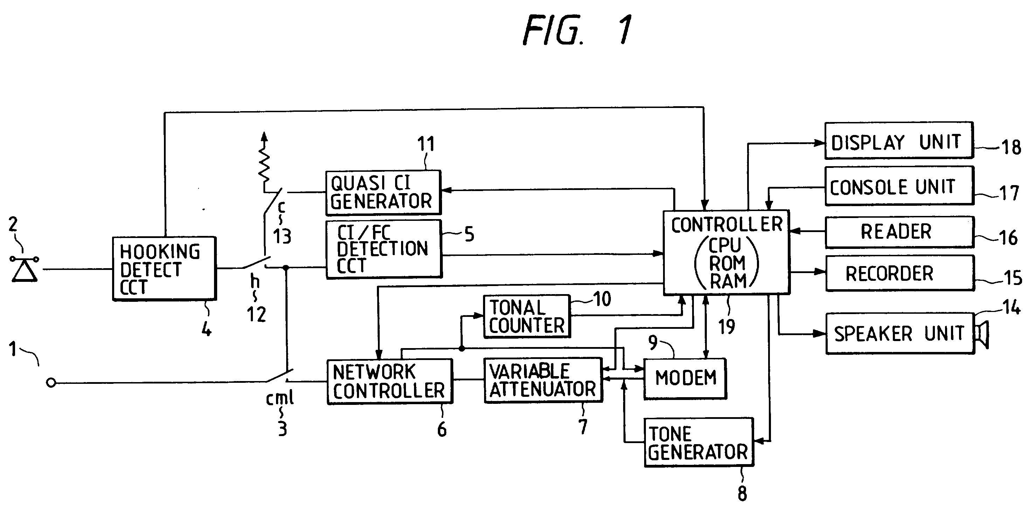

Fig. 1 shows a block diagram of a configuration of a facsimile device in one embodiment. In Fig. 1, numeral 1 denotes a telephone line to which the present device is connected, numeral 2 denotes a telephone set to be connected to the present device, numeral 3 denotes a relay CML which selectively connects the telephone set or the device to a line, numeral 4 denotes a hook status detector for detecting status of a hand set of the telephone set, numeral 5 denotes a CI/FC detector for detecting an incoming calling signal (CI) from the line or a called signal (FC) of a facsimile network, numeral 6 denotes a network controller for electrically interfacing with the line, numeral 7 denotes a variable attenuator for varying a send-out level of a signal to be sent out to the line, numeral 8 denotes a tone generator for generating a tone signal to be sent out to the line, numeral 9 denotes a modem for facsimile communication, numeral 10 denotes a tonal counter for counting a frequency of an incoming tonal signal from the line, numeral 11 denotes a quasi-CI signal generator for ringing a ringer of the telephone set from the device, numeral 12 denotes a relay H for selectively connecting the telephone set or the device to the line, numeral 13 denotes a relay C for connecting the quasi-CI signal generator to the telephone set, numeral 14 denotes a speaker for generating sound, numeral 15 denotes a recorder such as a printer, numeral 16 denotes a reader for reading a document, numeral 17 denotes a console unit comprising key entry switches for instructing operations of the device and a key entry scanner, numeral 18 denotes a display unit comprising a liquid crystal display and an LED, and numeral 19 denotes a controller for controlling the overall device. The controller 19 comprises a microcomputer, a read-only memory (ROM) which stores a control program, a random access memory (RAM) and other peripheral circuits of the microcomputer.

An operation of the present embodiment is now explained in detail.

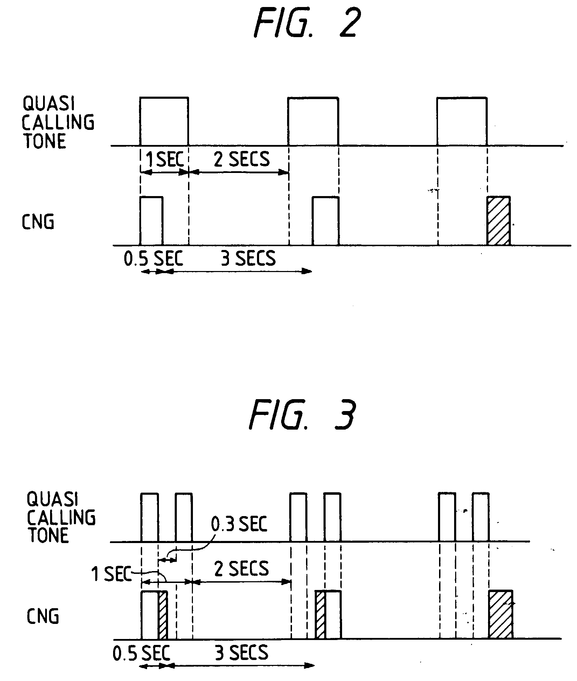

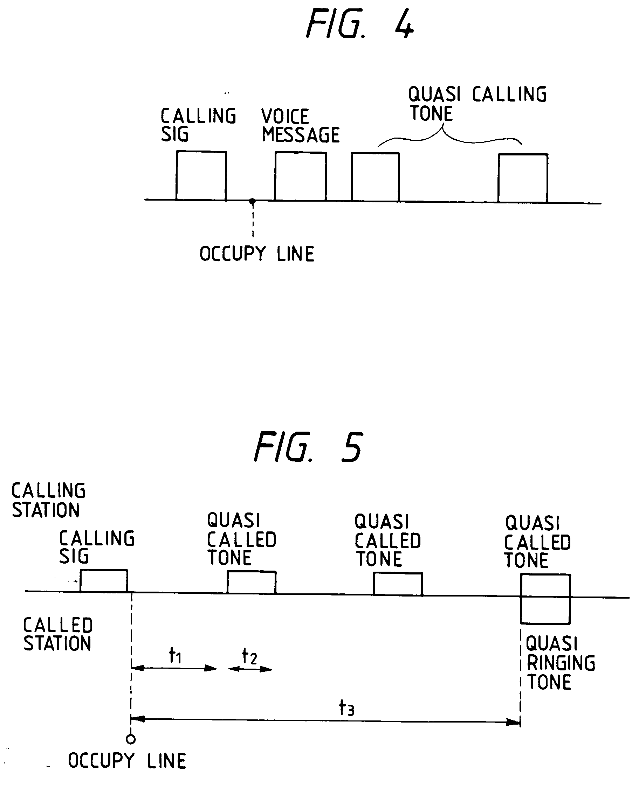

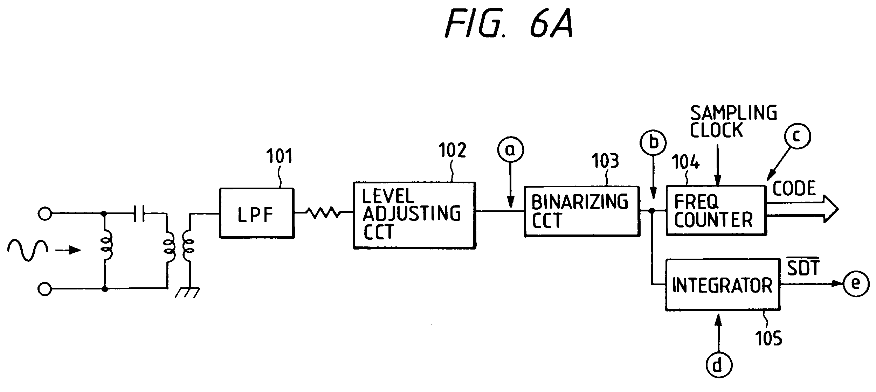

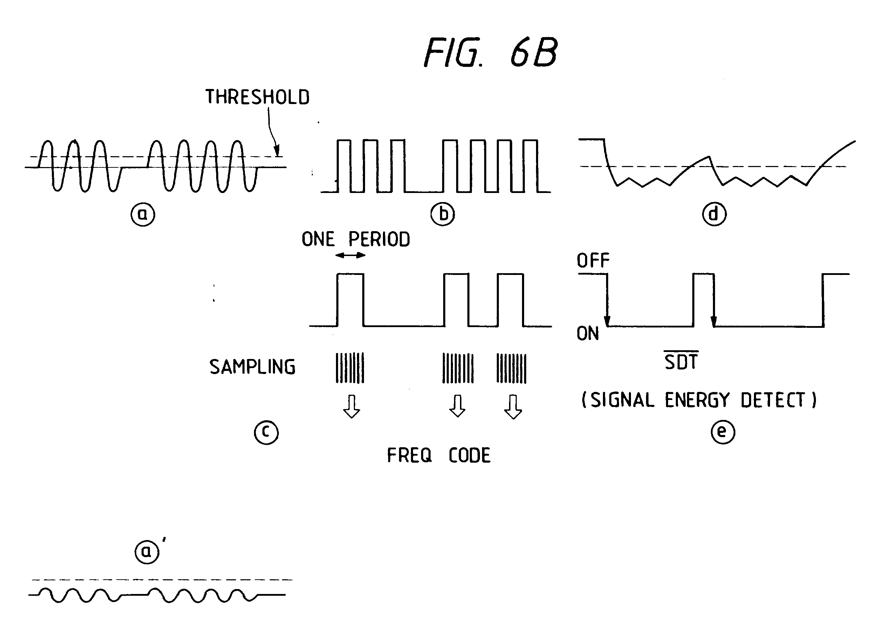

First, the present device is set in an auto-receive mode (auto-facsimile communication mode) and in a mode in which a telephone set connected is not rung by an external calling signal from the telephone line. This is done by setting the relay H of Fig. 1 to an off position. Under this condition, when the calling signal sent from a terminal station through the telephone line 1 is detected by the CI/FC detector 5, the cml relay is closed (turned on) to capture the line 1. Then, a significant signal from the calling station is monitored for t₁ time period as shown in Fig. 5. The significant signal is detected by the tonal counter 10 and the modem 9 through the network controller 6. The tonal counter 10 is configured as shown in Fig. 6A. The tonal counter 10 comprises a low pass filter 101, a level adjuster 102, a binary circuit 103, a frequency counter 104 and an integrator 105. Fig. 6B shows input and output signals of the tonal counter 10. An input signal ⓐ passes through the LPF 101 and the level adjuster 102 and is binarized by the binary circuit 103. When the input signal does not exceed a threshold as shown in ⓐ , the binary circuit 103 does not operate and no signal is produced. The binarized input signal ⓑ is counted by the frequency counter 104 to determine a frequency code of the input signal. (See ⓒ in Fig. 6(B)). The presence or absence of signal energy is determined by the integrator 105 to prevent mulfunction by a noise. (See ⓓ and ⓔ in Fig. 6(B)). The modem 9 detects a 300 dps binary protocol signal. In Fig. 5, when the CNG is detected in the first t₁ time period, it is determined that the calling station is a facsimile device and a called equipment identification signal (CED) and a digital identification signal (DIS) are sent out, and the facsimile communication is started. In this case, the facsimile communication is attained without ringing a calling tone at the called station before and after the reception of the call. As shown, the device repeats a quasi-called tone sequence with an off-time t₁ and an on-time t₂ in order to prevent strange feeling from being given to an operator at the calling station after the reception of the call, and t₁ is set to two seconds and t₂ is set to one second to cope with an exchange of a common public network. The quasi-called tone is sent out to the line 1 by the tone generator 8. In this case, since the-signal sequence of the CNG is on-time for 0.5 second and off-time for three seconds as shown in Fig. 2, there may be a timing which does not permit detection by the monitoring time of t₁ (2 seconds) period. Thus, the present device repeatedly monitors the quasi-called tone in every off-time for an initial identification time t₃ as shown in Fig. 5. If the calling station is a human or a facsimile device which does not send out the CNG, the device activates the built-in sound generator 14 (quasi-bell tone) after the t₃ period to inform the call to the operator at the called station and continuously send out the quasi-called tone to the telephone line 1.

Since it is possible that the calling station opens the telephone line, the significant signals such as CNG and FC as well as a busy tone from an exchange for the line 1 are monitored. If the busy tone is detected, the line is immediately opened so that the telephone line is efficiently utilized. The shorter the time t₃ is, the more preferable it is. It is set to 8 second for the following reason.

As described above, the signal sequence of the CNG is 0.5-second on-time and 3-second off-time. Taking a time margin of 15 % as requested by the CCITT Standard into consideration, a monitoring time of 4.025 seconds is required to assure detection without fail. In the present embodiment, since a half-duplex communication system is used, a signal from the calling station cannot be monitored when the device sends out the signal (quasi-called signal). In this case, 9.5 seconds are required in a worst case as shown in Fig. 2 and approximately 11 seconds are required before the quasi-bell tone is rung. In the present embodiment, a 0.3-second off-time is provided in the 1-second on-time of the quasi-called tone as shown in Fig. 3 and the signal is monitored during that period. Thus, in case of Fig. 3, the CNG signal component of approximately 0.3 second can be detected for six seconds. As a result, the time required is essentially the same as that for the full duplex communication system. For this reason, t₃ is set to 8 seconds including subsequent 2-second off-time. As described above, even in the course of the t₃ period, the facsimile communication is started when the significant signal CNG or FC is detected.

If the significant signal from the calling station is not detected in the t₃ period, the quasi-called tone is sent out to the line 1 and the built-in speaker 14 is rung to inform the call to the operator of the called station. The ringing of the built-in speaker 14 is synchronized with the quasi-called tone sent out to the line 1 so that the significant signal and the busy tone can be continuously monitored during the intervals of the signals and the apparatus can cope with a facsimile device which sends out the CNG with a delay. After the t₃ period, the above signals as well as the off-hook of the telephone set are monitored, and if the off-hook is detected by the off-hook detector 4, the line 1 is immediately switched to the telephone set 2. The call time after the t₃ period is approximately one minute while taking the non-detection of the busy tone into consideration. After the period, the cml relay is activated to open the telephone line 1 so that the apparatus returns to a stand-by status.

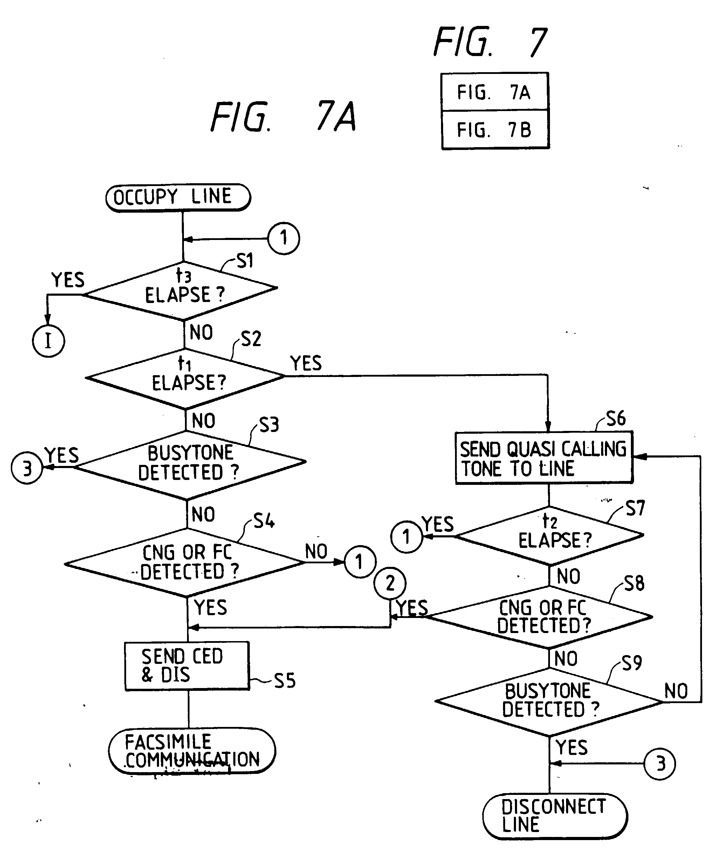

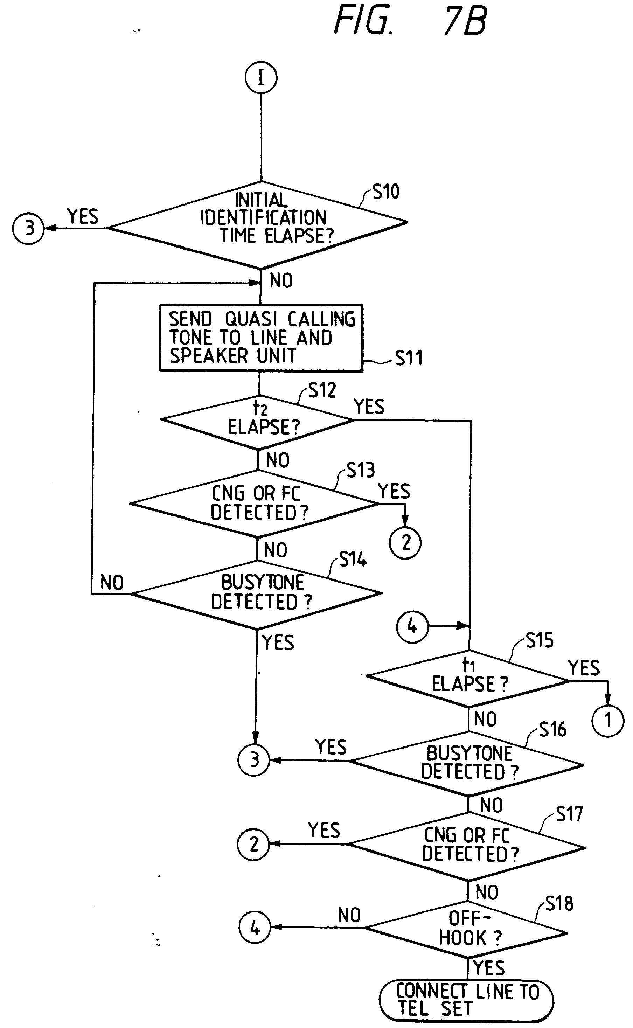

Fig. 7 shows a flow chart of a control operation of the controller 19 in the present embodiment. The control operation of the controller 19 is now explained with reference to the flow chart of Fig. 7.

When a call detection signal is supplied from the CI/FC detector 5, the controller 19 activates the cml relay 3 to capture the line, and starts the timer t₁ (2 seconds), the timer t₃ (8 seconds) and the initial identification timer T (35 seconds). Then, the process proceeds to a step S1.

In the step S1, whether the time t₃ has been elapsed or not since the line was captured (whether the timer t₃ has timed out or not) is determined. If the timer t₃ has not timed out, the process proceeds to a step S2. In the step S2, whether the timer t₁ has timed out and the time t₁ has been elapsed or not is determined. If the timer t₁ has not timed out, whether the busy tone has been detected or not is determined in a step S3, and whether the CNG signal or the FC signal has been detected or not is determined in a step S4. If the CNG signal or the FC signal is not detected, the process returns to the step S1. In this manner, in the t₁ period shown in Fig. 5, the busy tone and the CNG/FC signals are monitored, and if the CNG or FC signal is detected, the process proceeds from the step S4 to a step S5 so that the CED signal and the DIS signal are sent out to the line through the modem 9 and the facsimile communication is started. If the busy tone is detected in the step S3, the line 1 is opened and the control operation is terminated. The busy tone and the CNG signal are detected by determining the distribution of the frequency detection by the tonal counter 10.

When the timer t₁ times out after the period t₁ from the reception of the call, the process proceeds from the step S2 to a step S6 to start the timer t₂ and cause the tone generator 8 to send out the quasi-calling tone to the line 1.

In a step S7, whether the timer t₂ has timed out or not is determined. If the timer t₂ has not timed out, the detection of the CNG/FC signals and the detection of the busy tone are checked in steps S8 and S9 in the same manner as that in the steps S4 and S3.

If the timer t₂ has timed out in the step S7, the send-out of the quasi-calling signal to the line 1 is stopped, the timer t₁ is started again, and the process returns to the step S7. In this manner, the quasi-calling tone (quasi-called tone) is sent out to the line 1 for the period t₂ of Fig. 5.

On the other hand, if the time-out of the timer t₃ is detected in the step S1 (the period t₃ has been elapsed since the line was captured), the process proceeds from the step S1 to a step S10. In the step S10, whether the initial identification timer T has timed out or not (whether the initial identification time has been elapsed or not since the line was captured) is determined, and if the initial identification time has been elapsed, the line 1 is opened.

If the initial identification timer T has not timed out, the process proceeds from the step S10 to a step S11 to start the timer t₂ and cause the tone generator 8 to send out the quasi-calling tone to the line 1 and cause the speaker 14 to generate a calling sound to call an operator. In a step S12, whether the timer t₂ has timed out or not is determined. If the timer t₂ has not timed out, the detection of the CNG/FC signals and the detection of the busy tone are checked in steps S13 and S14 in the same manner as that in the steps S4 and S3. If none of the signals is detected, the process returns from the step 14 to the step S11.

On the other hand, if the time-out of the timer t₂ is detected in the step S12, the timer t₂ is started, and the process proceeds to a step S15 to determine whether the timer t₁ has timed out or not. If the timer t₁ has timed out, the process returns to the step S1. If the timer t₁ has not timed out, the detection of the busy tone and the detection of the CNG/FC signals are checked in steps S16 and S17 in the same manner as that in the steps S3 and S4. If neither busy tone nor CNG/FC is detected, the process proceeds to a step S18 to cause the hook status detector 4 to check if the hand set of the telephone set 2 has been hooked off or not. If the off-hook is not detected in the step S18, the process returns to the step S15. If the off-hook is detected, the cml relay 3 is deactivated and the relay H is activated to connect the line 1 to the telephone set 2 to permit the speech communication.

By the above control, the TEL/FAX automatic switching is attained.

A principle of signal detection by the tonal counter 10 is now explained.

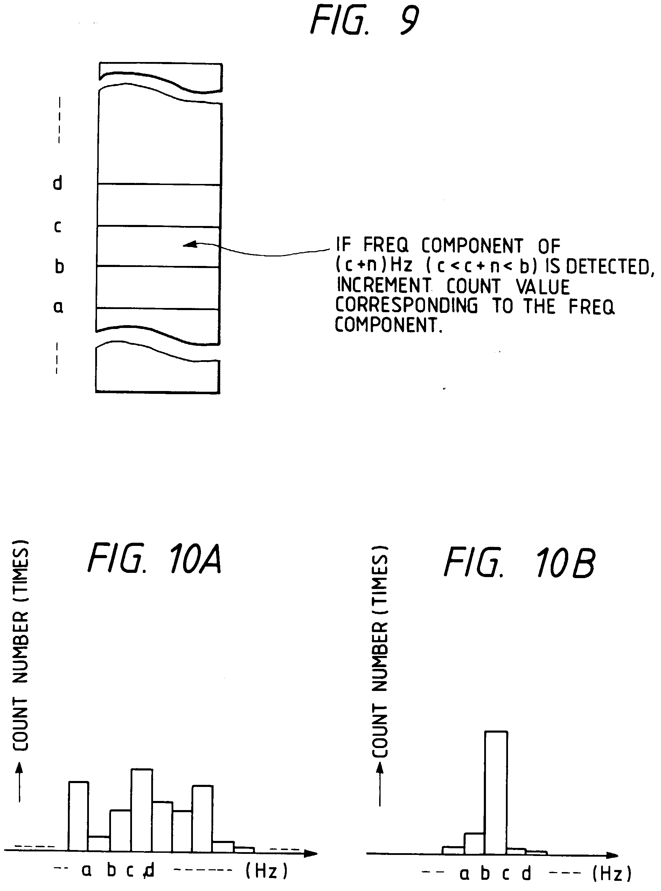

The frequency band of 300 - 3.4 K Hz detected by the tonal counter 10 is divided into a plurality of areas. (For example, since the CNG signal is 1100 Hz, it is divided by a 1000 - 1200 Hz pitch.) Counters are arranged on the RAM of the controller 19 of Fig. 1, one for each area. The corresponding area of the frequency data detected by the tonal counter 10 of Fig. 1 is determined and the corresponding counter is incremented by one. From the distribution of the frequency components at the end of a predetermined count or at the end of detection period, the facsimile signal, CNG signal, busy tone or voice signal is discriminated. The above frequency detection is shown in Figs. 9 and 10. The magnitude relation of the frequencies is a > b > c > d and n < b.

As shown in Fig. 9, the frequency components of the signal detected during the detection period are analyzed and the counts of the RAM areas corresponding to the frequencies are incremented or decremented. After the detection period, the counts of the RAM are checked. If the frequency components of the signal spread over a wide range and the count in a specific frequency componeht range is smaller than a predetermined value (a reference to detect a single signal, determined in consideration of various conditions of communication) as shown in Fig. 10A, it is determined that the signal is a voice signal. If the count for the specific frequency component is larger than the reference to detect the single signal, the signal of that frequency component is detected. In order to determine a proportion, a normalization operation is carried out by using a sum of counts of all counters for all areas as a mother figure.

By the principle described above, the CNG and the busy tone can be detected by the tonal counter 10. As described above, the voice signal can also be detected by the tonal counter 10. Accordingly, a step to detect the voice signal may be inserted between the steps S3 and S4, between the steps S8 and S9, between the steps S8 and S17, and between the steps S16 and S17 so that the speaker is rung when the voice signal is detected to inform to the operator of the reception of the call. As a result, the transition time to the speech may be shortened. The voice signal may be detected by detecting the voice signal a predetermined number of times continuously.

### (Embodiment 2)

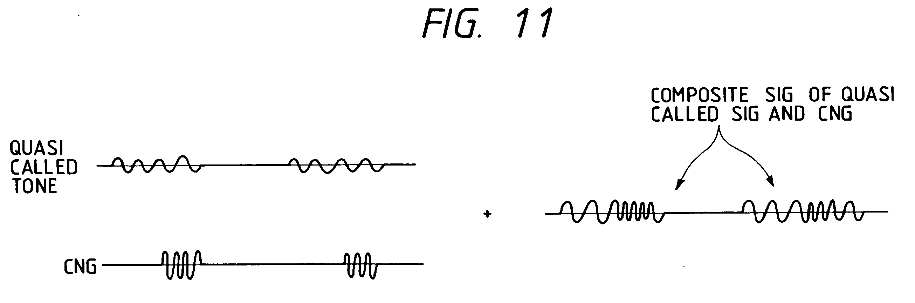

If the quasi-calling tone to be sent out to the line 1 is a single frequency signal other than CNG (1100 Hz) or FC (1300 Hz), the quasi-calling signal and the signal from the calling station are superimposed and it is applied to the tonal counter 10. However, the CNG signal can be discriminated by analyzing the frequency distribution of the tonal counter 10. Accordingly, the quasi-calling tone may be analogue to the existing called tone without inserting the 0.3-second off-time as shown in Fig. 3. The CNG signal for 0.5 second period can be detected in 4.025 seconds after the line has been captured so that the t₃ period in Fig. 5 may be set to 5 seconds. In this manner, the switching in a short period is attained. Specifically, as shown in Fig. 11, when the quasi-calling tone sent out from its own apparatus and the CNG from the calling station are superimposed, the CNG (0.5-second on-time) is normally shorter than the quasi-calling tone (1-second on-time). If the signal is detected by the tonal counter 10, the quasi-calling tone and the superimposed signal are detected. The superimposed signal is not detected at 1100 Hz (CNG) but detected at a fixed frequency modulated by the quasi-calling tone frequency. Accordingly, by recognizing the fixed frequency signal as the CNG, it is possible to detect the CNG during the send-out of the quasi-calling signal. The 1300 Hz calling signal (FC) of the F network can also be detected during the send-out of the quasi-calling tone, as the CNG is done.

### (Embodiment 3)

In the above embodiment, the call time after the elapse of the t₃ period is set to approximately one minute (by taking the non-detection of the busy tone into consideration), and the line is opened after the elapse of the time. However, since the calling station might be a facsimile device which does not send out the CNG, the CED or DIS may be sent out after the elapse of the call time. In this case, since the called station may be designed to receive the DIS twice for the countermeasure of echo, the DIS is resent twice or three times. If there is no response from the calling station after the DIS has been sent out the predetermined number of times or for a predetermined time period, the cm1 relay is activated to open the telephone line, and the apparatus returns to the stand-by status. When the binary protocol signal such as digital command signal (DCS) is received for the DIS, the facsimile communication is rapidly started.

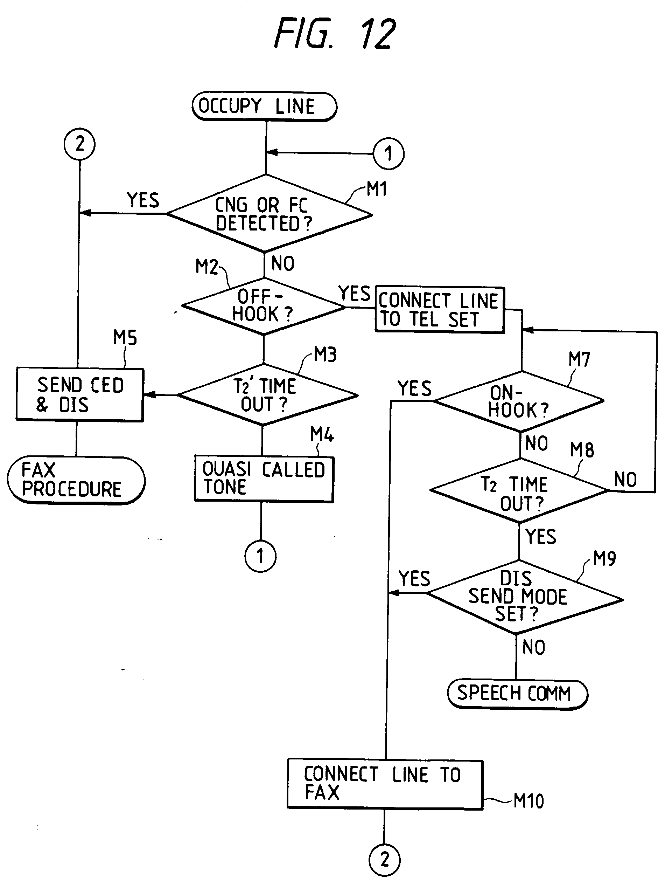

The call time for the above process should be set to a little bit shorter than T₁ = 35 + 5 seconds in the CCITT Recommendation T30. It is shown by T₁′ in Fig. 12.

### (Embodiment 4)

In the embodiment 3, the CED and DIS are sent out after the elapse of the fixed time (shorter than T₁ of the CCITT T30) in consideration of the facsimile device which does not send out the CNG. However, when the operator at the called station hooks off for the called tone, the following method is effective.

If the off-hook is detected after the quasi-bell tone has rung, the timer is started after the detection of the off-hook to measure a time to the on-hook. If this time is within a predetermined time T₂ (which is 4 - 10 seconds in consideration of no response by the operator at the called station or resetting of the hand set after recognition of the CNG), the cml relay is closed again before the station recognizes the off-signal after the detection of the on-hook to capture the line by the facsimile device. Then, the CED and DIS are sent out and the facsimile protocol is started. Alternatively, no timer operation may be carried out and the line is always switched to the facsimile device whenever the on-hook is detected to send out the CED and DIS when no response is detected or the CNG is detected.

Fig. 12 shows a flow chart of a control operation of the controller of the embodiment 3 and the embodiment 4.

When a call is received, the cml relay is activated to capture the line. Then, the timer T₁′ is started and the process proceeds to a step M1. In the steps M1, M2 and M3, the reception and detection of the CNG and FC, the detection of the off-hook of the hand set of the telephone set 2 and the time-out of the timer T₁′ are checked until the timer T₁′ times out. If the CNG/FC and the off-hook are not detected, the quasi-calling tone is sent to the line for the period t₂ at every elapse of the period t₁ in a step M4 in a manner shown in Fig. 7. If the CNG/FC is detected in the step M1 or the time-out of the timer T₁′ is detected in the step M3, the process proceeds to a step M5 to send out the CED and DIS to the line 1. Then, the facsimile communication is started.

If the off-hook of the telephone set 2 is detected in the step M2, the process proceeds to a step M6 to connect the line 1 to the telephone set 2 and start the timer T₂. Then, the process proceeds to a step M7. In the steps M7 and M8, whether the telephone set 2 has been hooked on or not before the timer T₂ times out is determined. If the telephone set has been hooked on before the timer T₂ times out, it is determined that the calling station may possibly a facsimile device. In a step M10, the cml relay is activated again to switch the line to the facsimile device. Then, the process proceeds to the step M5.

On the other hand, if the time-out of timer T₂ is detected in the step M8, whether the DIS send-out mode has been set by a mode key (not shown) of the console unit 17 or not is determined in a step M9. If the DIS send-out mode has been set, the process proceeds to a step M/0 to start the facsimile communication. If the DIS send-out mode has not been set, the speech communication is continued.

### (Embodiment 5)

In the above embodiment, the period t₃ is set to approximately 8 seconds. If it is desired to assure switching although it takes a longer time or start to call the called station even if the CNG is not detected, the period t₃ may be variable (operator may set by manipulation means) depending on the situation of facilities. Alternatively, the period t₃ is monitored, and if it does not or likely not to meet the detection time (it may possibly be CNG or FC), the monitor time may be extended to delay to call the called station. In this case, when the call to the called station has been started, it is assumed that a human will respond and the busy tone is monitored. In this manner, the detection rate is improved.

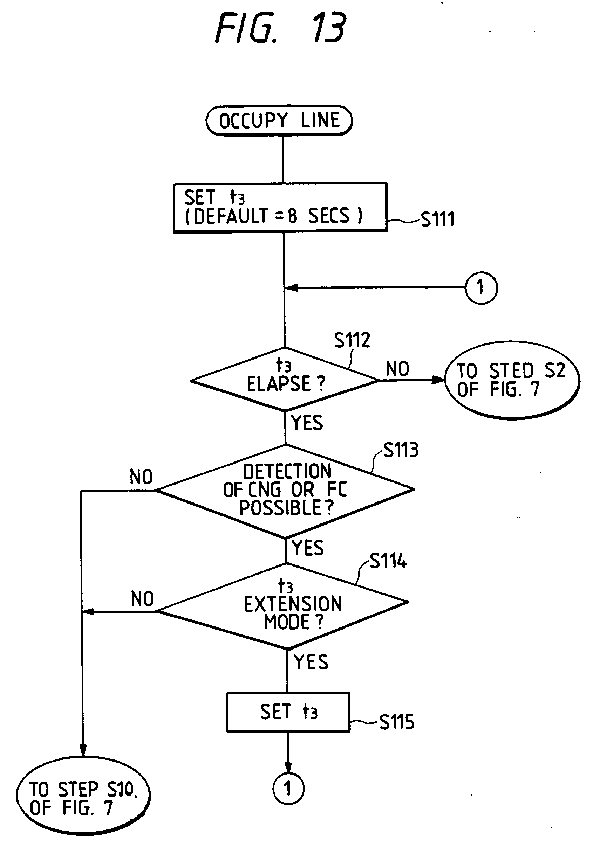

Fig. 13 shows a flow chart of the control operation of the embodiment 5. The step S1 in Fig. 7 is substituted by Fig. 13.

In a step S111, the timer t₃ is set to a value which has been preset by a key entry from the console unit 17 (or 8 seconds if there is no key entry) and the timer is started. In a step S112, whether the timer t₃ has timed out or not is determined.

If the timer t₃ has not timed out, the process proceeds to the step S2 of Fig. 7. If the timer t₃ has timed out, whether the CNG or FC may possibly be detected by the tonal counter 10 or not is determined in the step S3. If the CNG or FC may possibly be detected, the process proceeds to a step S114 to determine whether the t₃ extent ion mode has been set or not. If the t₃ extention mode has been set, the timer t₃ is started again in a step S115 (different time count may be set), and the process returns to the step S112.

In the step S113, if there is no possibility of detecting the CNG or FC and the t₃ extention mode has not been set in the step S114, the process proceeds to the step S10 of Fig. 7. In the embodiment S, the return to the step S1 in Fig. 7 ( ① ) is substituted by the return to the step S112 in Fig. 13.

### (Embodiment 6)

In the above embodiment, the quasi-called tone which is sent out to the line after the line has been captured is as similar as possible to the called tone of the station to which the calling station is connected so that the operator of the calling station feels no strange sense. By allowing the operator to set the format of the quasi-called tone, that is, t₁, t₂ and frequencies thereof by the console unit 17 of the apparatus, it is possible to simulate to the format of the called tone defined in a country of installation. Conversely, by setting a different called tone than that of the station, it may be possible to request waiting to the calling station operator.

In order to inform the call to the called station when the call is received, the called tone of the telephone set or bell tone by the speaker 14 may be generated with different format and frequency for one ring or for the t₃ period after the line has been captured so that the called station operator may be informed that the switching control is underway. In this manner, the operability at the called station is improved.

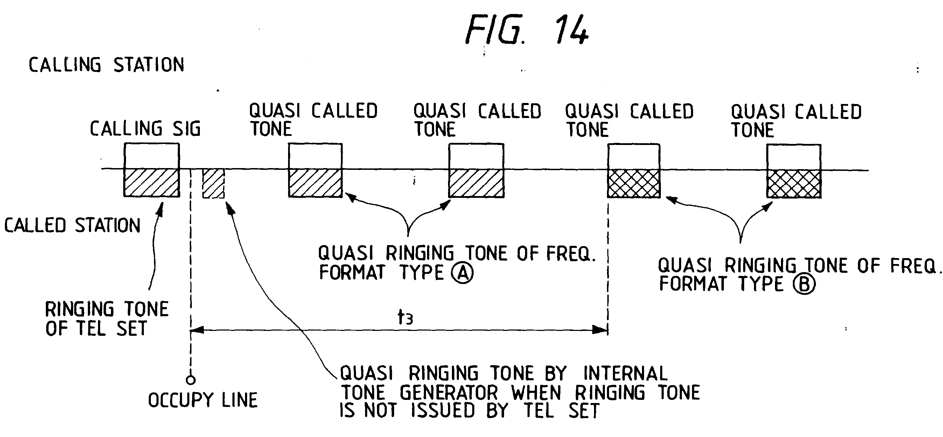

As shown in Fig. 14, this process discriminates the change of the frequency and the format as is done in the process after the elapse of the period t₃.

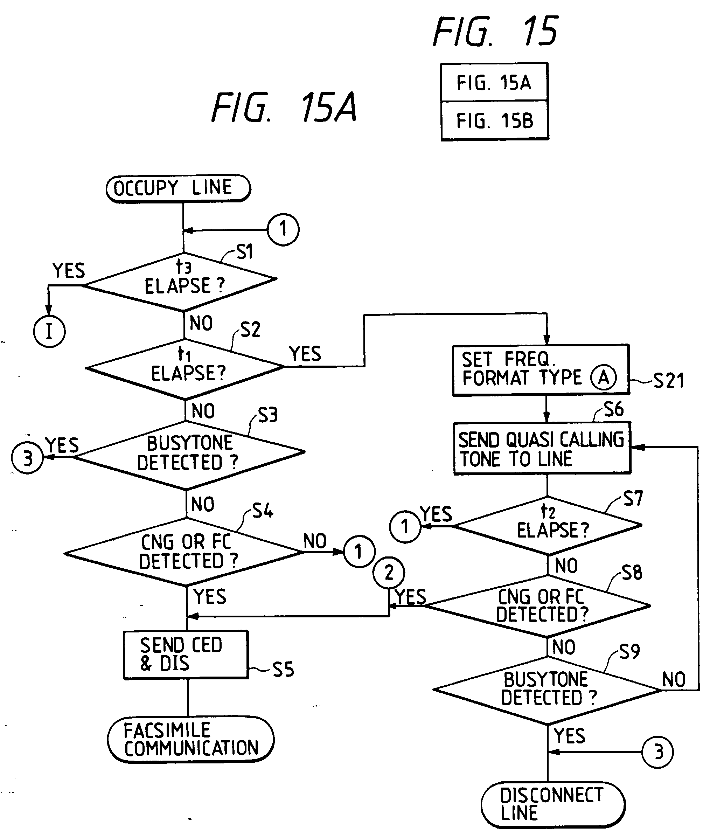

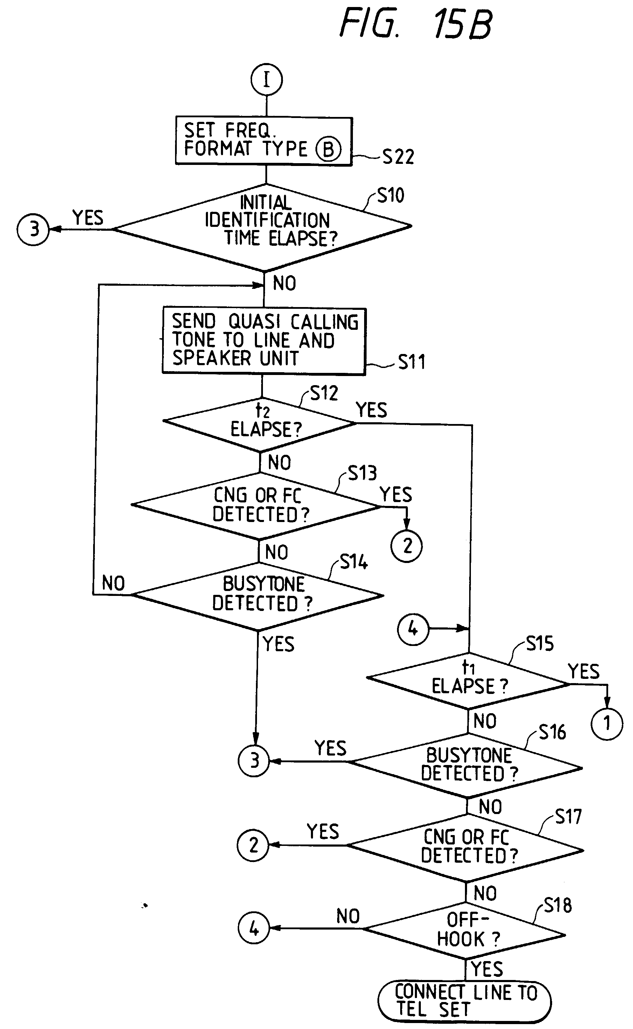

Fig. 15 shows a flow chart of a control operation of the embodiment 6. A difference between Fig. 15 and Fig. 7 resides in that a step S22 is added between the steps S7 and S10 of Fig. 7, and a step S21 is added between the steps S2 and S6. Other steps are same as those in the control operation of Fig. 7.

In the steps S21 and S22, the ringing frequency format of the speaker 14 is set. The ringing frequency format is preset by the key entry from the console unit 17. In the step S21, a frequency format Ⓐ is set, and in the step S22, a frequency format Ⓑ is set. By those steps, the quasi-bell tone is changed as shown in Fig. 14.

### (Embodiment 7)

In the above embodiment, the significant signals such as CNG, FC and busy tone are monitored by the transmission interval of the quasi-called tone and the off-time in the signal. Such quasi-called tone may be replaced by or combined with a message such as "Please wait for a while". If the message is periodically sent out like the quasi-bell tone, the significant signals may be monitored between the messages. If the message is continuously sent out, it is necessary to detect the CNG and FC while the message is sent out. In this case, if the half-duplex communication system as described in the embodiment 2 is used, the signal applied to the tonal counter is the superposition of the external signal and the signal which is sent out by its own device. Thus, it is necessary to detect the significant signal by filtering out the CNG component and the FC component by the message send-out unit or suppress the turn-around by a hybrid circuit in the network controller.

By the above control, it is not necessary to detect the voice, and the problem of unnatural operation of forcing the operator at the calling station to make voice and the problem of long time required from the detection of signal during the send-out of the voice message to the start of the facsimile communication are solved.

### (Embodiment 8)

In the above embodiment, if the significant signal is not detected after the period t₃ has been elapsed, the call is informed to the called station operator by the speaker in the apparatus. However, if the quality of the quasi-bell tone is poor or if the facsimile device is located at a distant place from the telephone set, the operator may not hear the quasi-bell tone of the facsimile device.

In this case, the relay H and the relay C in Fig. 1 may be closed and the ringer of the telephone set 2 may be rung by a quasi-CI signal generator 11 in order to solve the above problems.

### (Embodiment 9)

Instead of setting the ringer of the telephone set 2 in the non-ring mode, the relay H 12 in Fig. 1 may be positioned at an upper position whenever the telephone set 2 is not used so that the ringer of the telephone set 2 is not rung when a calling signal comes from the line 1. When the hand set is hooked on to use the telephone set 2, it is detected by the hook status detector 4 and the relay H 12 is returned to a lower position to connect the line 1 to the telephone set 2. When a power line fails or the power of the apparatus is turned off, the relay H 12 is at the lower position so that the ringer of the telephone set 2 is rung when a calling signal comes from the line 1.

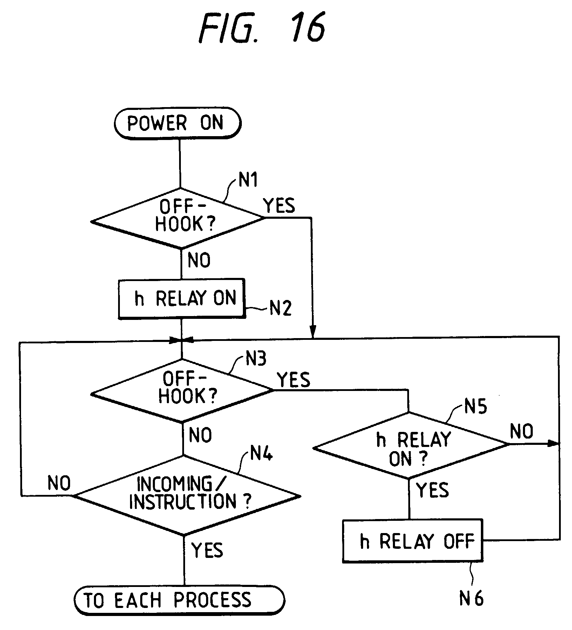

Fig. 16 shows a flow chart of a control operation of the embodiment 9.

When the power supply is turned on, the process proceeds to a step N1 to determine if the hand set of the telephone set 2 has been hooked off or not. If it has not been hooked off, the relay H 12 is activated in a step N2 and the process proceeds to a step N3. If the hand set has been hooked off, the process proceeds to the step N3. In the step N3, whether the telephone set 2 has been hooked off or not is determined, and if it has been hooked off, whether the relay H is on or not is determined in a step N5. If the relay H is on, the relay H is turned off in a step N6. Then, the process returns to the step N3.

If the telephone set 2 has not been hooked off in the step N3, the relay H is turned on in a step N4, and whether other command by the call or the key entry from the console unit 17 has been received or not is determined.

By the above control, the non-ringing reception of call by the facsimile device is attained.

### (Embodiment 10)

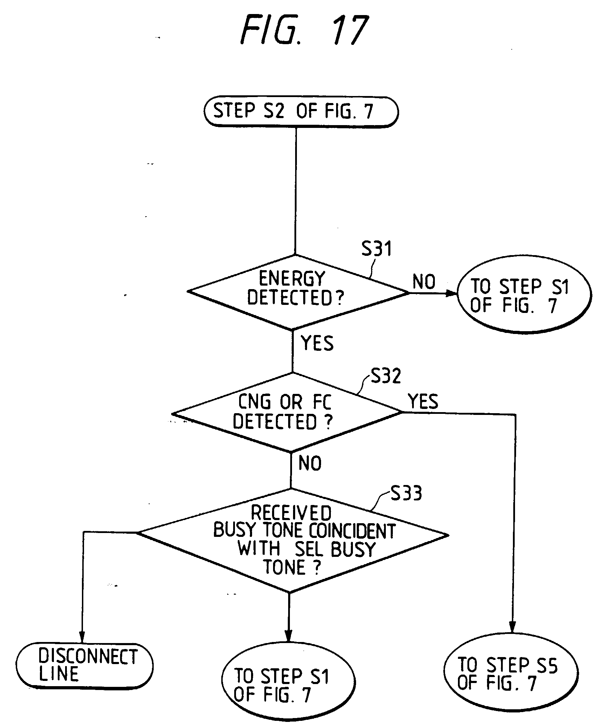

In the above embodiment, the significant signal as well as the busy tone are monitored to effectively utilize the line. Alternatively, the parameters (frequency, on-time, off-time, etc.) of the busy tone may be set by the operator through the console unit 17. Thus, a different busy tone may be set depending on the country to prevent a mis-operation. The control of the embodiment 10 may be attained by replacing the steps S3 and S4 of Fig. 7 by steps S31 - S33 shown in Fig. 17.

The step S31 to detect an energy the detection of SDT in Fig. 6(1)) is provided before the detection of the CNG/FC and the detection of the busy tone. If the energy is not aetected, the process returns to the step S1. If the energy is detected, the detection of the CNG/FC is checked in the step S32. If the CNG/FC is detected, the process proceeds to the step SS, and if the CNG/FC is not detected, whether the parameters of the received busy tone are equal to the predetermined parameters or not is determined in a step S33. If they are equal in the step S33, the line 1 is opened, and if they are not equal, the process returns to the step S7.

In this manner, the line is opened only when the predetermined busy tone is detected.

### (Embodiment 11)

In the above embodiment, the quasi-called tone sent out to the telephone line and the quasi-bell tone generated by the speaker of the apparatus are identical. Alternatively, they may be set by the operator through the console unit 17 to generate different tones. Where a plurality of telephone lines are used, the line by which the call has been received can be recognized by changing the tones. Since the ordinary quasi-called tone is sent back to the calling station, no strange feeling is imparted to the calling station.
(1) In accordance with the present embodiment, the line is captured without ringing for the calling signal from the telephone line. Then, the quasi-called tone is sent out to the line and the significant signal from the calling station is detected during the off-time t₂ of the quasi-called tone sequence. If the significant signal such as CNG or FC is detected in the predetermined time t₃, the facsimile communication is started, and if it is not detected, the quasi-bell tone is sent out from the facsimile device to call the operator at the called station. As a result,
   - Where the calling station is a telephone set, a normal telephone operation can be attained by both the calling station and the called station.
   - Where the calling station is an auto-send facsimile device, the calling station operates in an ordinary facsimile transmission mode and the called station operates a non-ringing auto-receive mode.

   Thus, more natural and easy-to-operate apparatus to the operator is provided.
   Further, since the voice response is not required;
   - A memory for the voice response is not necessary and the cost of the apparatus is reduced.
   - The time required before the called station operator is called or the facsimile auto-receive mode is started can be reduced by the send-out time of the voice response message.
(2) In the case (1), by allowing to change the on-time (t₁), off-time (t₂) and frequency of the quasi-called tone, similar patterns to those of the called tones of various exchanges can be produced. Thus, the operator at the calling station has less strange feeling in the operation.
(3) In the case (1), by detecting the CNG/FC signal as well as the busy tone from the exchange during the detection period of the significant signal, the line can be efficiently utilized by immediately opening the line when the busy tone is detected by the apparatus if the calling station opens the telephone line before the called station operator hooks off the telephone set.
(4) In the case (1), by providing the off-time t₄ (t₂ > t₄) in the on-time t₂ of the quasi-called tone and monitoring the significant signal during the off-time t₄, the TEL/FAX switching time is essentially same as that required in the full duplex communication system.
(5) In the case (1), by synchronizing the ringing of the quasi-bell tone by the apparatus with the send-out of the quasi-called tone, the significant signal and the busy signal can be monitored during the interval of the tone signals so that the apparatus may cope with the facsimile device which sends out the CNG signal with a delay.
(6) In the case (1), by providing the call time t₅ after the elapse of the time t₃ and opening the telephone line after the elapse of the time t₅ to return the apparatus to the stand-by status, the apparatus can cope with when the busy tone is not detected.
(7) In the case (1), by setting the quasi-called tone to a single frequency signal other than the CNG (1100 Hz) and the FC (1300 Hz), the signal from the apparatus can be discriminated when it is superimposed on the external signal. Thus, the significant signal (CNG, FC) can be detected in the full duplex mode while the quasi-called tone is sent out and the rapid TEL/FAX switching is attained.
(8) In the case (6), by sending out the CED/DIS n times after the elapse of the time t₅, and starting the facsimile communication if the binary protocol signal such as DCS is received for the DIS from the calling station and opening the telephone line in case of no response and returning the apparatus to the stand-by status, the facsimile device of the manual send mode which does not send out the CNG from the calling station can be operated.
(9) In the case (6), when the off-hook is detected after the quasi-bell tone has been rung and then the on-hook is detected, the apparatus captures the line before the station recognizes the disconnection signal and sends out the CED/DIS. If there is a response thereto, the facsimile communication is started. Thus, the facsimile reception is attained even if the operator at the received station hooks off the telephone set before the elapse of the time t₅.
(10) In the case (9), a timer which is started after the detection of the off-hook to measure a time until the subsequent on-hook is provided, and if this time period is within a predetermined period, the apparatus captures the line before the station recognizes the disconnection signal and sends out CED/DIS. If there is a response thereto, the facsimile protocol is started. Thus, the facsimile reception is attained even if the operator at the called station hooks off the telephone set before the elapse of the time t₅.
(11) In the case (1), by varying the time t₃, the timing to call the operator at the called station can be changed for the telephone dominate mode and the facsimile dominate mode.
(12) In the case (11), by monitoring for the time t₃ and extending the monitor time when the detection of the significant signal is not likely to delay the timing to start the call for the operator at the called station, the operability of the operator is improved.
   When the call for the operator at the called station is started, it is assumed that a human is responding and the busy tone is monitored. Thus, the detection rate is improved.
(13) In the case (1), the format and frequency of the calling signal to the operator at the called station is changed by the speaker 14 for the first called tone or the first ring of the bell tone by the speaker or for the time t₃ after the line has been captured so that the reception of the call or the switching control operation is informed to the operator. In this manner, the operability by the operator is improved.
(14) In the case (3), by monitoring the CNG, FC and busy tone as well as the voice, the call to the operator at the called station can be immediately started when the voice from the calling station is detected. Thus, the operability is improved.
(15) In the case (1), by providing the voice memory in the apparatus, the voice message stored in the memory can be sent out in place of the quasi-called tone.
(16) In the case (15), by filtering out the CNG component or the FC component by the message send-out unit or suppressing the turn-around in the hybrid circuit of the network controller, the significant signal can be detected in the full duplex communication mode while the message is sent out.
(17) In the case (1), by providing the quasi-CI generator 11 to allow the call of the operator at the called station by any externally attached telephone set, the apparatus can cope with even if the operator is at a distant place from the apparatus or the quality of the quasi-bell tone generated by the apparatus is poor. Further, non-ringing reception is attained even if the telephone set of the facsimile device has no function to turn off the bell tone.
(18) In the case (3), by setting the parameters of the busy tone such as frequency band, on-time and off-time by the operator through the console unit 17, the apparatus can cope with different busy tones of different exchanges.
(19) In the case (1), by setting the quasi-called tone sent out to the line and the quasi-bell tone generated by the speaker 14, by the operator, the two tones may be set differently so that the calling line out of a plurality of telephone lines can be discriminated by the tone of the quasi-bell tone.

The present invention is not limited to the above embodiments but various modifications thereof may be made.

## Claims

1. A communication apparatus comprising:
first detection means (5) for detecting a calling signal from a line (1);
second detection means (9,10) for detecting a signal indicating data communication from the line (1);
data communication means (9) for effecting data communication in response to detection of a signal by said second detection means (9,10);
sending means (8) for sending out a quasi-calling tone to the line; and
control means (19) for controlling said data communication means (9) and said sending means (8), the control means (19) being arranged to cause the data communication means (9) to effect data communication directly upon detection of a signal indicating data communication by the second detection means (9,10) within a predetermined period after the detection of a calling signal by the first detection means (5) and being arranged to cause the sending means (8) to send out the quasi-calling tone periodically when the second detection means (9,10) does not detect a signal indicating data communication within the predetermined time and then to stop the sending means (8) sending out the quasi-calling tone periodically and to cause the data communication means (9) to effect data communication when a signal indicating data communication is detected by the second detection means (9,10) after the predetermined time.

2. A communication apparatus according to claim 1, further comprising ringing means (14) for sending out a ringing tone to inform an operator of the reception of a call, the control means (19) being arranged to cause said ringing means (14) to generate the ringing tone periodically after the quasi-calling tone has been sent out a predetermined number of times.

3. A communication apparatus according to claim 1 or 2, further comprising third detection means for detecting a busy tone from the line, the control means (19) being arranged to disconnect the line in response to the detection of a busy tone.

4. A communication apparatus according to claim 1, 2 or 3, wherein the control means (19) is arranged to cause the sending means (8) to send out the quasi-calling tone at a predetermined time interval different from that at which a signal indicating data communication is periodically sent from a calling station.

5. A communication apparatus according to claim 4, wherein said control means (19) is arranged to cause the sending means (8) to provide an off-time of a predetermined duration in the quasi-calling tone.

6. A communication apparatus according to claim 1, wherein the quasi-calling tone is a single frequency signal other than a signal indicating data communication, and the control means (19) is arranged to cause the sending out of the quasi-calling tone and the detection of a data communication indicating signal by said second detection means (9,10) to be executed in parallel.

7. A communication apparatus according to claim 1, wherein the control means (19) is arranged to cause said data communication means (9,10) to effect data communication automatically after the quasi-calling tone has been sent out for a predetermined time period.

8. A communication apparatus according to claim 2, further comprising speech communication means (2) for effecting speech communication and means (4) for detecting an off-hook state of the speech communication means, the control means (19) being arranged to cause the sending means (8) and the ringing means (14) to stop sending the quasi-calling tone and generating the ringing tone in response to the detection of an off-hook of said speech communication means (2).

9. A communication apparatus according to claim 8, wherein the control means (19) is arranged to cause the data communication means (9) to effect data communication when an on-hook state of said speech communication means (2) is detected before a predetermined time elapses from the detection of the off-hook state.

10. A communication apparatus according to claim 2, wherein the number of times of send-out of the quasi-calling tone before said informing means is operated is set arbitrarily.

11. A communication apparatus according to any one of the preceding claims, wherein the format of the quasi-calling tone is set arbitrarily.

12. A communication apparatus according to claim 2, further comprising means (9,10) for detecting a voice signal from the line (1), the control means (19) being arranged to cause said ringing means (14) to generate the ringing tone periodically in response to the detection of a voice signal.

13. A communication apparatus according to any one of the preceding claims, wherein the quasi-calling tone is substituted by a voice message or combined with the voice message.

14. A communication apparatus according to claim 1, further comprising:
a telephone set (2) for speech communication;
means (12) for disconnecting the telephone set from the line (1); and
means (11) for sending out a quasi-calling signal to said telephone set, wherein the control means (19) is arranged to cause said quasi-calling signals sending means (11) to generate the quasi-calling signal to ring the telephone set (2) after the quasi-calling tone has been sent out a predetermined number of times.

15. A communication apparatus according to claim 14, wherein the disconnecting means (12) is arranged to disconnect said telephone set from the line when a hand set of said telephone set is hooked on and to connect the telephone set to the line only when the hand set is hooked off.

16. A communication apparatus according to claim 3, further comprising setting means for setting parameters for the detection of the busy tone by said third detection means which parameters are variable.

17. A method of operating a communication apparatus, which method comprises effecting data communication directly upon detection of a signal indicating data communication from a line (1) within a predetermined period after the detection of a calling signal from the line (1) and sending out a quasi-calling tone to the line periodically when a signal indicating data communication is not detected within the predetermined time and then stopping sending out the quasi-calling tone periodically and effecting data communication when a signal indicating data communication is detected after the predetermined time.

18. A method according to claim 17, further comprising sending out a ringing tone to inform an operator of the reception of a call periodically after the quasi-calling tone has been sent out a predetermined number of times.

19. A method according to claim 17 or 18, further comprising detecting a busy tone from the line and disconnecting the line in response to the detection of a busy tone.

20. A method according to claim 17, 18 or 19, which comprises sending out the quasi-calling tone at a predetermined time interval different from that a which a signal indicating data communication is periodically sent from a calling station.

21. A method according to claim 20, which comprises providing an off-time of a predetermined duration in the quasi-calling tone.

22. A method according to claim 17, which comprises sending out the quasi-calling tone as a single frequency signal other than a signal indicating data communication, and detecting a data communication indicating signal in parallel with the sending out of the quasi-calling tone.

23. A method according to claim 17, which comprises effecting data communication automatically after the quasi-calling tone has been sent out for a predetermined time period.

24. A method according to claim 18, further comprising stopping sending of the quasi-calling tone and stopping generation of the ringing tone in response to the detection of an off-hook of a speech communication means (2).

25. A method according to claim 24, which comprises effecting data communication when an on-hook state of said speech communication means (2) is detected before a predetermined time elapses from the detection of the off-hook state.

26. A method according to claim 18, which comprises setting arbitrarily the number of times of send-out of the quasi-calling tone before an operator is informed of the reception of a call.

27. A method according to any one of claims 17 to 26, which comprises setting arbitrarily the format of the quasi-calling tone.

28. A method according to claim 18, further comprising detecting a voice signal from the line (1) and generating the ringing tone periodically in response to the detection of a voice signal.

29. A method according to any one of claims 17 to 28, which comprises substituting a voice message or a quasi-calling tone combined with the voice message for the quasi-calling tone.

30. A method according to claim 17, further comprising sending out a quasi-calling signal to ring a telephone set (2) after the quasi-calling tone has been sent out a predetermined number of times.

31. A method according to claim 30, which further comprises disconnecting said telephone set (2) from the line (1) when a hand set of said telephone set is hooked on and connecting the telephone set (2) to the line only when the hand set is hooked off.

32. A method according to claim 19, further comprising setting parameters for the detection of the busy tone, which parameters are variable.

## Patentansprüche

1. Kommunikationseinrichtung, mit:
ersten Feststellmitteln (5) zur Feststellung eines Anrufssignals aus einer Leitung (1);
zweiten Feststellmitteln (9, 10) zur Feststellung eines Signals, das die Datenübertragung aus der Leitung (1) anzeigt;
Datenkommunikationsmitteln (9) zur Ausführung der Datenkommunikation abhängig von der Feststellung eines Signals von den zweiten Feststellmitteln (9, 10);
Sendemitteln (8) zur Aussendung eines Quasi-Anruftones auf die Leitung; und mit
Steuermitteln (19) zur Steuerung der Datenkommunikationsmittel (9) und der Sendemittel (8), wobei die Steuermittel eingerichtet sind, die Datenübertragungsmittel zu veranlassen, die Datenübertragung direkt nach Feststellung eines Signals auszuführen, das die Datenübertragungskommunikation von den zweiten Feststellmitteln (9, 10) innerhalb einem vorbestimmten Zeitraum nach der Feststellung eines Anrufsignals durch die ersten Feststellmittel (5) anzeigt, und das eingerichtet ist, die Sendemittel (8) zu veranlassen, den Quasi-Anrufton periodisch auszusenden, wenn das zweite Feststellmittel (9, 10) ein Signal nicht feststellt, das die Datenübertragung innerhalb der vorbestimmten Zeit anzeigt, und dann das Sendemittel (8) anzuhalten, den Quasi-Anrufton periodisch auszusenden, und die Datenübertragungsmittel zu veranlassen, die Datenübertragung auszuführen, wenn ein Signal von den zweiten Feststellmitteln (9, 10) nach der vorbestimmten Zeit eine Datenkommunikation feststellt.

2. Kommunikationseinrichtung nach Anspruch 1, die des weiteren Läutemittel (14) zur Aussendung eines Läutetons enthält, um eine Bedienperson über den Empfang eines Anrufs zu informieren, wobei die Steuermittel (19) eingerichtet sind, die Läutemittel (14) zu veranlassen, den Läuteton periodisch zu erzeugen, nachdem der Quasi-Anrufton für eine vorbestimmte Anzahl von Malen gesendet worden ist.

3. Kommunikationseinrichtung nach Anspruch 1 oder 2, die des weiteren dritte Feststellmittel enthält, die einen Besetztton aus der Leitung feststellen, wobei die Steuermittel (19) eingerichtet sind, die Leitung abhängig von der Feststellung eines Besetzttons zu trennen.

4. Kommunikationseinrichtung nach Anspruch 1, 2 oder 3, deren Steuermittel (19) eingerichtet ist, die Sendemittel (8) zu veranlassen, den Quasi-Anrufton zu einem vorbestimmten Zeitintervall auszusenden, das sich von demjenigen unterscheidet, welches eine Datenübertragung anzeigt, die periodisch von einer rufenden Station gesendet wird.

5. Kommunikationseinrichtung nach Anspruch 4, deren Steuermittel (19) eingerichtet ist, die Sendemittel zu veranlassen, eine Sperrzeit einer vorbestimmten Dauer beim Quasi-Anrufton zu erzeugen.

6. Kommunikationseinrichtung nach Anspruch 1, deren Quasi-Anrufton ein einfrequentes Signal ist, das sich von dem die Datenkommunikation anzeigenden Signal unterscheidet, und wobei das Steuermittel (19) eingerichtet ist, das Aussenden des Quasi-Anruftons und die Feststellung des die Datenkommunikation anzeigenden Signals durch die zweiten Feststellmittel (9, 10) in paralleler Ausführung zu veranlassen.

7. Kommunikationseinrichtung nach Anspruch 1, deren Steuermittel (19) eingerichtet ist, die Datenkommunikationsmittel (9, 10) zu veranlassen, die Datenkommunikation automatisch auszuführen, nachdem der Quasi-Anrufton während einer vorbestimmten Zeit ausgesendet worden ist.

8. Kommunikationseinrichtung nach Anspruch 2, die des weiteren über Sprachkommunikationsmittel (2) zur Ausführung der Sprachkommunikation verfügt und über Mittel (4) zur Feststellung eines Nichtaufgelegt-Zustandes der Sprachkommunikationsmittel, wobei das Steuermittel (19) eingerichtet ist, die Sendemittel (8) und die Läutemittel (14) zu veranlassen, die Sendung des Quasi-Anruftones und die Erzeugung des Läutetones abhängig von der Feststellung des Nichtaufgelegt-Zustandes des Sprachkommunikationsmittels (2) zu beenden.

9. Kommunikationseinrichtung nach Anspruch 8, deren Steuermittel (19) eingerichtet ist, die Datenkommunikationsmittel zu veranlassen, die Datenkommunikation auszuführen, wenn ein Aufgelegt-Zustand der Sprachkommunikationsmittel (2) festgestellt wird, bevor eine vorbestimmte Zeit ab der Feststellung des Nichtaufgelegt-Zustandes verstrichen ist.

10. Kommunikationseinrichtung nach Anspruch 2, bei der die Anzahl von Aussendungen des Quasi-Anruftones vor Betätigung der Informationsmittel willkürlich einstellbar ist.

11. Kommunikationseinrichtung nach einem der vorstehenden Ansprüche, bei der das Format des Quasi-Anruftones willkürlich einstellbar ist.

12. Kommunikationseinrichtung nach Anspruch 2, die des weiteren über Mittel (9, 10) zur Feststellung eines Sprachsignals aus der Leitung (1) verfügt, wobei das Steuermittel (19) eingerichtet ist, die Läutemittel (14) zur periodischen Erzeugung des Läutetons abhängig von der Feststellung eines Sprachsignals zu veranlassen.

13. Kommunikationseinrichtung nach einem der vorstehenden Ansprüche, bei der der Quasi-Anrufton durch eine Sprachmitteilung ersetzt wird oder mit der Sprachmitteilung kombiniert wird.

14. Kommunikationseinrichtung nach Anspruch 1, die des weiteren ausgestattet ist mit:
einem Fernsprechapparat (2) zur Sprachkommunikation;
Mitteln (12) zur Trennung des Fernsprechapparates von der Leitung (1); und mit
Mitteln (11) zur Aussendung eines Quasi-Anrufssignals zum Fernsprechapparat, wobei das Steuermittel (19) eingerichtet ist, die Quasi-Anrufsignal-Sendemittel (11) zu veranlassen, das Quasi-Anrufsignal zum Lauten des Fernsprechapparates (2) zu veranlassen, nachdem der Quasi-Anrufton in einer vorbestimmten Anzahl von Malen ausgesendet worden ist.

15. Kommunikationseinrichtung nach Anspruch 14, bei der das Trennmittel (12) den Fernsprechappart von der Leitung trennt, wenn ein Handapparat des Fernsprechapparates aufgelegt wird, und den Fernsprechapparates nur dann mit der Leitung verbindet, wenn der Handapparat abgehoben ist.

16. Kommunikationseinrichtung nach Anspruch 3, die des weiteren ausgestattet ist mit Mitteln zur Parametereinstellung zur Feststellung des Besetzttones durch das dritte Feststellmittel, dessen Parameter variabel sind.

17. Verfahren zur Betätigung einer Kommunikationseinrichtung, bei dem die Ausführung der Datenkommunikation direkt nach Feststellung eines Signals erfolgt, das eine Datenkommunikation aus einer Leitung innerhalb eines vorbestimmten Zeitraums nach der Feststellung eines Anrufsignals aus der Leitung (1) anzeigt, und ein Quasi-Anrufton periodisch in die Leitung ausgesandt wird, wenn ein die Datenkommunikation anzeigendes Signal nicht innerhalb der vorbestimmten Zeit festgestellt wird, und bei dem dann die periodische Aussendung des Quasi-Anruftones gestoppt und die Datenkommunikation ausgeführt wird, wenn ein die Datenkommunikation anzeigendes Signal nach einer vorbestimmten Zeit festgestellt wird.

18. Verfahren nach Anspruch 17, das des weiteren die Aussendung eines Läutetones umfaßt, um eine Bedienperson über den Empfang eines periodischen Rufes nach dem Quasi-Anrufton informiert, der eine vorbestimmte Anzahl von Malen ausgesandt worden ist.

19. Verfahren nach Anspruch 17 oder 18, bei dem des weiteren ein Besetztton aus der Leitung festgestellt wird und die Leitung abhängig von der Feststellung eines Besetzttones getrennt wird.

20. Verfahren nach Anspruch 17, 18 oder 19, bei dem das Aussenden des Quasi-Anruftones in einem vorbestimmten Zeitintervall erfolgt, das sich von demjenigen unterscheidet, bei dem ein die Datenkommunikation anzeigendes Signal periodisch von einer rufenden Station gesandt wird.

21. Verfahren nach Anspruch 20, bei dem eine Sperrzeit einer vorbestimmten Dauer beim Quasi-Anrufton vorgesehen ist.

22. Verfahren nach Anspruch 17, bei dem einerseits das Aussenden des Quasi-Anruftones als ein einfrequentes Signal, das sich von einem die Datenkommunikation anzeigenden Signal unterscheidet, und andrerseits das Feststellen eines die Datenkommunikation anzeigenden Signals in paralleler Ausführung zum Aussenden des Quasi-Anruftones vorgesehen ist.

23. Verfahren nach Anspruch 17, bei dem die Datenkommunikation automatisch ausgeführt wird, nachdem der Quasi-Anrufton über eine vorbestimmte Zeitdauer ausgesandt worden ist.

24. Verfahren nach Anspruch 18, das des weiteren das Einstellen des Aussendens des Quasi-Anruftones umfaßt und das Einstellen der Erzeugung des Läutetones abhängig von der Feststellung eines Nichtaufgelegt-Zustandes eines Sprachkommunikationsmittels (2).

25. Verfahren nach Anspruch 24, das die Ausführung der Datenkommunikation umfaßt, wenn ein Aufgelegt-Zustand des Sprachkommunikationsmittels (2) vor Ablauf einer vorbestimmten Zeit ab Feststellung des Nichtaufgelegt-Zustandes festgestellt wird.

26. Verfahren nach Anspruch 18, das die willkürliche Einstellung der Anzahl von Aussendungen des Quasi-Anruftones umfaßt, bevor eine Bedienperson vom Empfang eines Rufes informiert wird.

27. Verfahren nach einem der Ansprüche 17 bis 26, das das willkürliche Einstellen des Formates des Quasi-Anruftones umfaßt.

28. Verfahren nach Anspruch 18, das des weiteren die Feststellung eines Sprachsignals aus der Leitung (1) umfaßt und die periodische Erzeugung des Läutetones abhängig von der Feststellung eines Sprachsignals.

29. Verfahren nach einem der Ansprüche 17 bis 28, das die Substituierung einer Sprachmitteilung umfaßt oder eines Quasi-Anruftones in Verbindung mit der Sprachmitteilung für den Quasi-Anrufton.

30. Verfahren nach Anspruch 17, das des weiteren die Aussendung eines Quasi-Anrufsignals zum Läuten eines Fernsprechapparates (2) enthält, nachdem der Quasi-Anrufton eine bestimmte Anzahl von Malen ausgesandt worden ist.

31. Verfahren nach Anspruch 30, bei dem des weiteren der Fernsprechapparat (2) von der Leitung (1) getrennt wird, wenn ein Handapparat des Fernsprechapparates aufgelegt ist, und den Fernsprechapparat (2) mit der Leitung verbindet, wenn der Handapparat abgehoben ist.

32. Verfahren nach Anspruch 19, das Einstellparameter zur Feststellung des Besetzttones umfaßt, wobei die Parameter variabel sind.

## Revendications

1. Appareil de communication comprenant :
des premiers moyens de détection (5) pour détecter un signal d'appel provenant d'une ligne (1);
des seconds moyens de détection (9, 10) pour détecter un signal indiquant une communication de données, provenant de la ligne (1);
des moyens de communication de données (9) pour effectuer une communication de données sous l'effet de la détection d'un signal par les seconds moyens de détection (9, 10);
des moyens d'émission (8) pour émettre sur la ligne une quasi-tonalité d'appel; et
des moyens de commande (19) pour commander les moyens de communication de données (9) et les moyens d'émission (8), les moyens de commande (19) étant conçus pour faire en sorte que les moyens de communication de données (9) effectuent une communication de données directement sous l'effet de la détection, par les seconds moyens de détection (9, 10), d'un signal indiquant une communication de données, au cours d'une période prédéterminée après la détection d'un signal d'appel par les premiers moyens de détection (5), et étant conçus pour commander aux moyens d'émission de données (8) d'émettre périodiquement la quasi-tonalité d'appel lorsque les seconds moyens de détection (9, 10) ne détectent pas un signal indiquant une communication de données pendant la période prédéterminée, et ensuite pour commander aux moyens d'émission (8) de cesser périodiquement l'émission de la quasi-tonalité d'appel, et pour commander aux moyens de communication de données (9) d'effectuer une communication de données lorsqu'un signal indiquant une communication de données est détecté par les seconds moyens de détection (9, 10) après la période prédéterminée.

2. Appareil de communication selon la revendication 1, comprenant en outre des moyens de sonnerie (14) pour émettre une tonalité de sonnerie pour informer un opérateur de la réception d'un appel, les moyens de commande (19) étant conçus pour commander aux moyens de sonnerie (14) de produire périodiquement la tonalité de sonnerie après que la quasi-tonalité d'appel a été émise un nombre de fois prédéterminé.

3. Appareil de communication selon la revendication 1 ou 2, comprenant en outre des troisièmes moyens de détection pour détecter une tonalité d'occupation provenant de la ligne, les moyens de commande (19) étant conçus pour déconnecter la ligne sous l'effet de la détection d'une tonalité d'occupation.

4. Appareil de communication selon la revendication 1, 2 ou 3, dans lequel les moyens de commande (19) sont conçus pour commander aux moyens d'émission (8) d'émettre la quasi-tonalité d'appel à un intervalle de temps prédéterminé qui diffère de celui auquel un signal indiquant une communication de données est émis périodiquement par une station appelante.

5. Appareil de communication selon la revendication 4, dans lequel les moyens de commande (19) sont conçus pour commander aux moyens d'émission (8) d'observer un temps d'arrêt prédéterminé dans la quasi-tonalité d'appel.

6. Appareil de communication selon la revendication 1, dans lequel la quasi-tonalité d'appel est un signal monofréquence autre qu'un signal indiquant une communication de données, et les moyens de commande (19) sont conçus pour faire en sorte que l'émission de la quasi-tonalité d'appel et la détection d'un signal d'indication de communication de données par les seconds moyens de détection (9, 10), soient accomplies en parallèle.

7. Appareil de communication selon la revendication 1, dans lequel les moyens de commande (19) sont conçus pour faire en sorte que les moyens de communication de données (9, 10) accomplissent automatiquement une communication de données après que la quasi-tonalité d'appel a été émise pendant une période prédéterminée.

8. Appareil de communication selon la revendication 2, comprenant en outre des moyens de communication de parole (2) pour effectuer une communication de parole et des moyens (4) pour détecter un état décroché des moyens de communication de parole, les moyens de commande (19) étant conçus pour faire en sorte que les moyens d'émission (8) et les moyens de sonnerie (14) arrêtent l'émission de la quasi-tonalité d'appel et la génération de la tonalité de sonnerie sous l'effet de la détection d'un état décroché des moyens de communication de parole (2).

9. Appareil de communication selon la revendication 8, dans lequel les moyens de commande (19) sont conçus pour commander aux moyens de communication de données (9) d'accomplir une communication de données lorsqu'un état raccroché des moyens de communication de parole (2) est détecté avant qu'un temps prédéterminé ne se soit écoulé à partir de la détection de l'état décroché.

10. Appareil de communication selon la revendication 2, dans lequel le nombre de fois que la quasi-tonalité d'appel est émise avant que les moyens d'information ne soient actionnés, est fixé arbitrairement.

11. Appareil de communication selon l'une quelconque des revendications précédentes, dans lequel le format de la quasi-tonalité d'appel est fixé arbitrairement.

12. Appareil de communication selon la revendication 2, comprenant en outre des moyens (9, 10) pour détecter un signal vocal provenant de la ligne (1), les moyens de commande (19) étant conçus pour commander aux moyens de sonnerie (14) de produire périodiquement la tonalité de sonnerie sous l'effet de la détection d'un signal vocal.

13. Appareil de communication selon l'une quelconque des revendications précédentes, dans lequel la quasi-tonalité d'appel est remplacée par un message vocal ou combinée avec le message vocal.

14. Appareil de communication selon la revendication 1, comprenant en outre :
un poste téléphonique (2) pour des communications de parole;
des moyens (12) pour déconnecter le poste téléphonique de la ligne (1); et
des moyens (11) pour émettre un quasi-signal d'appel vers le poste téléphonique, les moyens de commande (19) étant conçus pour faire en sorte que les moyens d'émission (11) de quasi-signaux d'appel produisent le quasi-signal d'appel pour faire sonner le poste téléphonique (2) après que la quasi-tonalité d'appel a été émise un nombre de fois prédéterminé.

15. Appareil de communication selon la revendication 14, dans lequel les moyens de déconnexion (12) sont conçus pour déconnecter le poste téléphonique de la ligne lorsqu'un combiné du poste téléphonique est raccroché, et pour connecter le poste téléphonique à la ligne seulement lorsque le combiné est décroché.

16. Appareil de communication selon la revendication 3, comprenant en outre des moyens de réglage pour régler des paramètres pour la détection de la tonalité d'occupation par les troisièmes moyens de détection, ces paramètres étant variables.

17. Procédé d'exploitation d'un appareil de communication, ce procédé comprenant l'accomplissement d'une communication de données directement sous l'effet de la détection d'un signal indiquant une communication de données, qui provient d'une ligne (1), au cours d'une période prédéterminée après la détection d'un signal d'appel provenant de la ligne (1), et l'émission périodique d'une quasi-tonalité d'appel vers la ligne, lorsqu'un signal indiquant une communication de données n'est pas détecté au cours de la période prédéterminée, et ensuite l'arrêt de l'émission périodique de la quasi-tonalité d'appel et l'accomplissement d'une communication de données lorsqu'un signal indiquant une communication de données est détecté après la période prédéterminée.

18. Procédé selon la revendication 17, comprenant en outre l'émission périodique d'une tonalité de sonnerie pour informer un opérateur de la réception d'un appel, après que la quasi-tonalité d'appel a été émise un nombre de fois prédéterminé.

19. Procédé selon la revendication 17 ou 18, comprenant en outre la détection d'une tonalité d'occupation provenant de la ligne, et la déconnexion de la ligne sous l'effet de la détection d'une tonalité d'occupation.

20. Procédé selon la revendication 17, 18 ou 19, comprenant l'émission de la quasi-tonalité d'appel à un intervalle de temps prédéterminé qui diffère de celui auquel un signal indiquant une communication de données est émis périodiquement par une station appelante.

21. Procédé selon la revendication 20, comprenant l'établissement d'un temps d'arrêt d'une durée prédéterminée dans la quasi-tonalité d'appel.

22. Procédé selon la revendication 17, comprenant l'émission de la quasi-tonalité d'appel sous la forme d'un signal monofréquence autre qu'un signal indiquant une communication de données, et la détection d'un signal indiquant une communication de données, en parallèle avec l'émission de la quasi-tonalité d'appel.

23. Procédé selon la revendication 17, comprenant l'accomplissement automatique d'une communication de données après que la quasi-tonalité d'appel a été émise pendant une période prédéterminée.

24. Procédé selon la revendication 18, comprenant en outre l'arrêt de l'émission de la quasi-tonalité d'appel et l'arrêt de la génération de la tonalité de sonnerie sous l'effet de la détection d'un état décroché d'un moyen de communication de parole (2).

25. Procédé selon la revendication 24, comprenant l'accomplissement d'une communication de données lorsqu'un état raccroché du moyen de communication de parole (2) est détecté avant l'écoulement d'un temps prédéterminé à partir de la détection de l'état décroché.

26. Procédé selon la revendication 18, comprenant la fixation de façon arbitraire du nombre de fois que la quasi-tonalité d'appel est émise, avant qu'un opérateur ne soit informé de la réception d'un appel.

27. Procédé selon l'une quelconque des revendications 17 à 26, comprenant la fixation arbitraire du format de la quasi-tonalité d'appel.

28. Procédé selon la revendication 18, comprenant en outre la détection d'un signal vocal provenant de la ligne (1) et la génération périodique de la tonalité de sonnerie sous l'effet de la détection d'un signal vocal.

29. Procédé selon l'une quelconque des revendications 17 à 28, comprenant le remplacement de la quasi-tonalité d'appel par un message vocal ou par une quasi-tonalité d'appel combinée avec le message vocal.

30. Procédé selon la revendication 17, comprenant en outre l'émission d'un quasi-signal d'appel pour faire sonner un poste téléphonique (2), après que la quasi-tonalité d'appel a été émise un nombre de fois prédéterminé.

31. Procédé selon la revendication 30, comprenant en outre la déconnexion du poste téléphonique (2) vis-à-vis de la ligne (1) lorsqu'un combiné du poste téléphonique est raccroché, et la connexion du poste téléphonique (2) à la ligne seulement lorsque le combiné est décroché.

32. Procédé selon la revendication 19, comprenant en outre le réglage de paramètres pour la détection de la tonalité d'occupation, ces paramètres étant variables.
